(19) Europäisches Patentamt / European Patent Office / Office européen des brevets

(11) **EP 2 290 397 B1**

(12) **EUROPÄISCHE PATENTSCHRIFT**

(45) Veröffentlichungstag und Bekanntmachung des Hinweises auf die Patenterteilung:
**22.06.2011 Patentblatt 2011/25**

(51) Int Cl.:
*G01S 13/88* (2006.01)   *G01S 15/88* (2006.01)
*G01N 29/07* (2006.01)   *G01N 29/44* (2006.01)

(21) Anmeldenummer: **10075348.2**

(22) Anmeldetag: **14.08.2010**

(54) **Messverfahren zur zerstörungsfreien Analyse einer Schneeschichtung und Messvorrichtung zur Durchführung des Messverfahrens**

Measuring method for non-destructive analysis of a snow pack and measuring device for carrying out the method

Procédé de mesure destiné à l'analyse non destructive d'une couche de neige et dispositif de mesure destiné à l'exécution du procédé de mesure

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **28.08.2009 DE 102009039716**

(43) Veröffentlichungstag der Anmeldung:
**02.03.2011 Patentblatt 2011/09**

(73) Patentinhaber:
• **Stiftung Alfred-Wegener-Institut für Polar- und Meeresforschung**
  **27570 Bremerhaven (DE)**
• **Ruprecht-Karls-Universität Heidelberg**
  **69117 Heidelberg (DE)**

(72) Erfinder:
• **Eisen, Olaf**
  **72764 Reutlingen (DE)**
• **Heilig, Achim**
  **83734 Hausham (DE)**

(56) Entgegenhaltungen:
**WO-A1-2004/036155     US-B1- 6 957 593**

• **HEILIG A: "Next level for snow pack monitoring in real-time using Ground Pemnetrating Radar (GPR) technology" INTERNATIONAL SNOW SCIENCE WORKSHOP, WHISTLER, ISSW 2008; SEPTEMBER 21-27, 2008,, 21. September 2008 (2008-09-21), Seiten 111-117, XP009140908**
• **KINAR N J ET AL: "Determining snow water equivalent by acoustic sounding" HYDROLOGICAL PROCESSES JOHN WILEY & SONS LTD. UK, Bd. 21, Nr. 19, 2007, Seiten 2623-2640, XP002608856 ISSN: 0885-6087 DOI: DOI:10.1002/HYP.6793**

EP 2 290 397 B1

**Beschreibung**

Die Erfindung bezieht sich auf ein Messverfahren zur zerstörungsfreien Analyse einer Schneeschichtung durch Ermitteln des Reflexionsverhaltens von Messsignalen an Messpunkten in horizontalen Schichtgrenzen in der Schneeschichtung mittels

- Senden zumindest eines Messsignals in Aufwärtsrichtung von unterhalb der Schneeschichtung zu Messpunkten,
- Empfangen von Reflexionssignalen in Abwärtsrichtung unterhalb der Schneeschichtung von den Messpunkten,
- Ermitteln von Reflexionskoeffizienten, Phasenverschiebungen und Signallaufzeiten aus den Mess- und Reflexionssignalen in den Messpunkten und
- Bestimmen von relevanten physikalischen Parametern der Schneeschichtung in den Messpunkten in Abhängigkeit von den ermittelten Reflexionskoeffizienten, Phasenverschiebungen und Signallaufzeiten.

Dabei werden bei dem gattungsgemäßen Messverfahren ausschließlich elektromagnetische Messsignale eingesetzt.

Weiterhin bezieht sich die Erfindung auf eine Messvorrichtung zur Durchführung des Messverfahrens mit zumindest einem von unterhalb der Schneeschichtung aufwärts sendenden Sender, einem unterhalb der Schneeschichtung abwärts empfangenden Empfänger und einer Auswerteeinrichtung für die Mess- und Reflexionssignale, wobei der Sender zum Senden und der Empfänger zum Empfangen von elektromagnetischen Signalen ausgebildet ist.

Die Erfindung betrifft das Gebiet der Bestimmung des Schneedeckenaufbaus, insbesondere der Bestimmung der Schneehöhe und der Detektion von Schwachschichten in der Schneeschichtung zur Lawinenvorhersage ohne die Notwendigkeit, diese Messung von einer Person vor Ort durchführen lassen zu müssen. Unter bestimmten Witterungsbedingungen bildet sich in einer Schneedecke oder an der Schneeoberfläche eine zumeist horizontale schwache Schicht aus, die, nach weiteren Schneefällen zu den benachbarten Schneeschichten eine obere und eine untere horizontale Schichtgrenze aufweist. Solche Schwachschichten können nur geringe Spannungen aufnehmen und sind deshalb häufig an der Auslösung von Lawinen in Form von Schneebrettern beteiligt. In der Praxis ist es bislang nur möglich, diese Schwachschichten durch eine direkte Beprobung der Schneestratigraphie (Schichtaufbau einer Schneeschicht) zu bestimmen, was in der Regel in manuell gegrabenen Schneeprofilen geschieht. Dies wird von den nationalen und regionalen Lawinenwarndiensten mehrmals die Woche durchgeführt. Das Problem dabei ist, dass in besonders lawinengefährdeten Hängen auf Grund des Risikos für den Untersuchenden eine direkte Beprobung nicht durchgeführt werden kann. Autonome Vorrichtungen ohne manuellen Zugriff können in der Praxis derzeit nur die Schneehöhe bestimmen, z.B. über Ultraschall-Schneehöhenmesser an Wetterstationen oder mittels Satelliten-Fernerkundung. Bisher erfolgt deshalb eine numerische Modellierung der Schneeverfrachtung und Übertragung der an einem anderen Ort erlangten Kenntnisse der Schneestratigraphie auf die gefährdeten Hänge. Mittels spezieller geophysikalischer Techniken, vor allem elektromagnetischer Reflexionsverfahren, d.h. Bodenradar, ist es aber mittlerweile möglich, die Schichtung der Schneestratigraphie berührungs- und zerstörungsfrei von unterhalb der Schneedecke her zu bestimmen. Dabei werden Informationen über Schneezutrag und die zeitliche Entwicklung der Schneestratigraphie in lawinengefährdeten Gebieten erhalten, wodurch die Schneedeckenstabilität abgeleitet werden kann.

**STAND DER TECHNIK**

Aus der DE 34 16 246 C1 ist eine Vorrichtung zur Steuerung von Schneefahrzeugen in Abhängigkeit von der Beschaffenheit der Schneeschichtung bekannt, bei der am Schneefahrzeug zwei Sende- und Empfangseinheiten vorgesehen sind, die von der Oberseite der Schneeschichtung her in abwärtsschauender Richtung entweder elektromagnetische oder akustische Messsignale aussenden und die Reflexionssignale detektieren und bezüglich der Beschaffenheit der Schneeschichtung auswerten. Ein ähnliches Verfahren ist aus der WO 01116560 A2 bekannt, bei dem zur Kartographierung der Schneeschichtung bzw. Schneetiefe von einem Mobilfahrzeug aus eine Kombination von einem Ortungssystem (Global Positioning System (GPS)) und einem abwärtsschauenden Bodenradar (Ground Penetrating Radar GPR)) genutzt wird.

Ein Messverfahren mit Anwendung von elektromagnetischen Messsignalen im optischen Bereich zur Kartographierung der Schneeschichtung der Wand eines Schneeschacht mittels Infrarotphotographie ist aus der VERÖFFENTLICHUNG I: "Measuring specific surface area of snow by near-infrared photography" (Matzl, Schneebeli, Journal of Glaciology, Vol 52, No.179, 2006, pp 558-564) bekannt. Hierbei handelt es sich aber um ein zerstörendes Verfahren, bei dem ein Schneeschacht gegraben und dessen Oberfläche nur mit einer einzigen Messung beprobt wird, um die Ergebnisse dann auf die gesamte Schneeschicht zu übertragen. Weiterhin wird in der **VERÖFFENTLICHUNG II:** "Schallabsorption von Schnee" (Maysenhölder et al. (Fraunhofer Publica IBP-Mitteilung 35 (2008) No. 486) die außerordentlich gute Absorptionsfähigkeit von Schnee mit Hilfe von akustischen Messungen und einer rechnerischen Nachbildung der gemessenen Absorptionsgrade mit Hilfe des Wilson-Models als Absorptionsmodel untersucht.

Eine Anwendung von mathematischen Inversionsverfahren bei der Annäherung von Messdaten durch mathematischen Modelle und zur Lösung von Gleichungssystemen ist beispielsweise aus der DE 195 28198 A1 für die Bestimmung der Intensitätsverteilung eines Laserstrahls, aus der DE 30 02 791 C2 für die Bestimmung der meteorologischen Parameter Sichtweite, Schrägsichtweite und Wolkenhöhe aus elektromagnetischen Messsignalen im optischen Bereich in Form von Laserpulsen oder aus der **VERÖFFENTLICHUNG III :** "Inference of velocity pattern from isochronous layers in firn, using an inverse method" (O. Eisen, Journal of Glaciology, Vol. 54, No. 187, 2008, pp 613-630) zum Rückschluss auf vorhandene Schnee- und Eisschichtungen aus gemessenen Geschwindigkeitsmustern bekannt.

Aus der DE 196 33 813 A1 ist ein Verfahren zur zerstörungsfreien dreidimensionalen Erfassung von Strukturen in Bauwerken, insbesondere aus Beton oder ähnlichen Materialien, bekannt, bei dem der zu untersuchende Bereich sowohl mit Ultraschall (relevante physikalische Parameter Dichte- und Schallgeschwindigkeitsunterschiede) als auch mit abwärts schauendem Radar (relevante physikalische Parameter Dielektrizitätskonstante und Feuchteverteilung) abgetastet wird, eine Strukturdarstellung des untersuchten Bereichs sowohl auf der Grundlage der mittels Schall erfassten Daten als auch auf der Grundlage der mittels Radar erfassten Daten erfolgt und die beiden Darstellungen dann tiefenabhängig kalibriert werden. Dabei werden aus den winkelunabhängig gewonnenen Messdaten mithilfe eines speziellen Abbildungsverfahrens grundsätzlich dreidimensionale Bilder des zu untersuchenden Bereiches ermittelt. Die als Fingerprints zu bezeichnenden Strukturen werden dann mit entsprechenden Verfahren verglichen und auf Abweichungen hin untersucht.

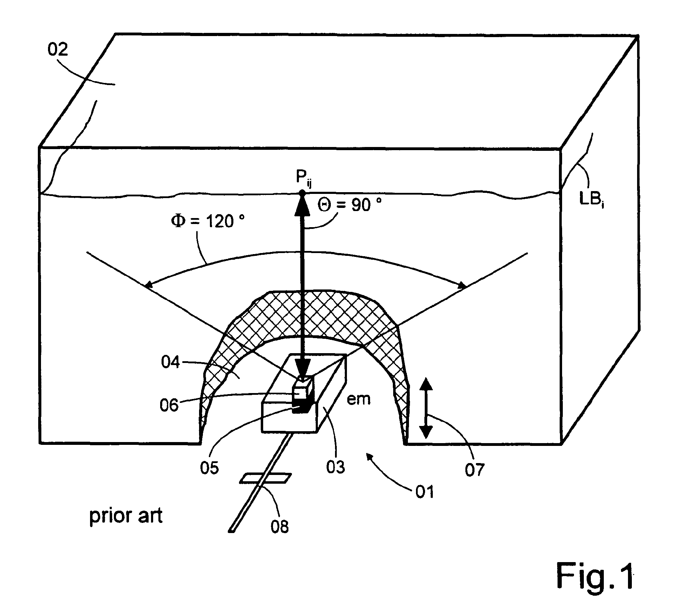

Der nächstliegende Stand der Technik, von dem die vorliegende Erfindung ausgeht, wird in der **VERÖFFENTLICHUNG IV:** "Next level for snow pack monitoring in real-time using Ground-Penetrating Radar (GPR) technology" (A. Heilig et al., International Snow Science Workshop in Whistler, ISSW 2008, Paper zum Vortrag am 22.09.2008, pp 111-117, vergleiche **FIGUR 1)** offenbart. Hier wird das eingangs angegebene gattungsgemäße aktive Messverfahren zur zerstörungsfreien Analyse einer Schneeschichtung beschrieben, durch das Informationen über den Schneezutrag und die zeitliche Entwicklung der Schneestratigraphie in lawinengefährdeten Gebieten erhältlich sind. Dazu werden Messsignale ausgesendet und die Reflexionssignale von jeder in der Schneeschichtung vorhandenen Schichtgrenze bezüglich Signallaufzeit, Amplitude und Phase detektiert. Dabei stellt jede Schichtgrenze - als Übergang zwischen zwei unterschiedlichen Schneeschichten - eine zweidimensionale Diskontinuität verschiedener physikalischer Eigenschaften der Schneeschichtung dar. Bei dem bekannten Messverfahren wird die Schneestratigraphie ausschließlich auf Basis von elektromagnetischen Messsignalen bestimmt. Dadurch können nur solche physikalischen Parameter ermittelt werden, die auch in einer Wechselwirkung mit den elektromagnetischen Messsignalen stehen. Hierbei handelt es sich vornehmlich um die Dielektrizitätszahl der Schneeschichtung, von der dann auf deren Dichte rückgeschlossen werden kann. Somit wird nur von einer Messgröße auf den relevanten Schichtparameter rückgeschlossen, was zu Ungenauigkeiten in dessen Bestimmung führen kann.

Zur Durchführung des bekannten Messverfahrens befindet sich bei der ebenfalls aus der **VERÖFFENTLICHUNG IV** bekannten Messvorrichtung ein aufwärts schauendes (d.h. aufwärts vom Boden in Richtung Himmel sendendes) Bodenradar unterhalb der zu vermessenden Schneeschichtung. Die Aussendung des Messsignals erfolgt bei dem bekannten Messverfahren ausschließlich unter einem einzigen Abstrahlwinkel direkt vertikal nach oben (senkrechter Einfallswinkel 90° zur horizontalen Oberfläche). Durch die vertikale Aussendung des Messsignals und die Detektion direkt am Ort der Aussendung wird die Winkel- und Polarisationsabhängigkeit der Reflexionssignale vernachlässigt, was zu einer weiteren Ungenauigkeit in der Bestimmung des relevanten Schichtparameters führen kann. Durch den Öffnungswinkel des Senders von ca. 120° kommt es bei der ausschließlich senkrechten Abstrahlung außerdem zu störenden Streusignalen von der Seite, die bei dem bekannten Messverfahren jedoch durch eine vertikale Verschiebung des Senders herausgefiltert werden können, da nur die Laufzeiten der Störsignale unabhängig von der vertikalen Senderposition konstant sind.

## AUFGABENSTELLUNG

Die **AUFGABE** für die vorliegende Erfindung ist darin zu sehen, das gattungsgemäße Messverfahren der oben beschrieben Art so weiterzubilden, dass eine erhöhte Genauigkeit bei der Ermittlung der relevanten physikalischen Parameter der zu untersuchenden Schneeschichtung erreicht wird. Weiterhin soll eine verbesserte Messvorrichtung zur Verfahrensdurchführung besonders kompakt sein und störungsfrei arbeiten. Die erfindungsgemäße LÖSUNG für diese Aufgabe ist dem Verfahrensanspruch und dem nebengeordneten Vorrichtungsanspruch zu entnehmen. Vorteilhafte Weiterbildungen der Erfindung werden in den Unteransprüchen aufgezeigt und im Folgenden im Zusammenhang mit der Erfindung näher erläutert.

Bei dem erfindungsgemäßen Messverfahren werden zum einen zusätzlich akustische Messsignale eingesetzt. Diese sind zeitlich und örtlich kongruent zu den elektromagnetischen Messsignalen und erreichen somit gleiche Messpunkte, sodass jeder Messpunkt sowohl mit einem elektromagnetischen Messsignal als auch mit einem akustischen Messsignal abgetastet wird. Aufgrund der höheren Auflösung von akustischen Messverfahren im Vergleich zu elektromagnetischen Messverfahren und der starken Absorption von elektromagnetischen Wellen durch flüssiges Wasser (z.B.

bei vorhandener Oberflächenschmelze im Bereich der zu untersuchenden Schneeschichtung) verbessert das akustische Messverfahren die Detektion von Schneeschichten. Die mit der Erfindung elektromagnetisch und akustisch erhaltenen Messdaten bzw. Reflexionskoeffizienten, Phasenverschiebungen und Signallaufzeiten werden dann in einem mathematischen Gleichungssystem mit den relevanten physikalischen Parametern der Schneeschichtung miteinander gekoppelt. Das Gleichungssystem wird mit einem mathematischen Inversionsverfahren gelöst, sodass die bestmöglichen physikalischen Parameterwerte für die Messdaten berechnet werden können. Bei der Auswertung der elektromagnetischen Signale werden Informationen im Wesentlichen über die Dichte der Schneeschichtung, aber auch über Wassergehalt und Zusammensetzung (Struktur) erhalten. Die Auswertung der akustischen Signale ergibt neben Informationen zur Dichte über die Auswertung der Ausbreitungsgeschwindigkeiten auch Informationen über das rheologische Verhalten der Schneeschichtung. Neben der Dichte einer Schneeschichtung hat insbesondere das Fließverhalten einer Schneeschichtung großen Einfluss auf die Entstehung von Lawinen. Über die Auswertung von akustischen Signalen können bei der Erfindung somit weitere relevante physikalische Parameter ermittelt werden, was die Zuverlässigkeit der Vorhersage bei dem erfindungsgemäßen Verfahren wesentlich verbessert.

Zum anderen werden bei dem erfindungsgemäßen Verfahren die auftretenden winkel- und polarisationsabhängigen Änderungen der physikalischen Parameter der Schneeschichtung erfasst und berücksichtigt. Dies erfolgt durch Variieren des Einfallswinkels der elektromagnetischen und akustischen Messsignale beim Senden zu den Messpunkten, winkelabhängiges Empfangen der elektromagnetischen und akustischen Reflexionssignale von den Messpunkten und winkelabhängiges Ermitteln der Reflexionskoeffizienten, Phasenverschiebungen und Signallaufzeiten der elektromagnetischen und akustischen Signale in den Messpunkten genau erfasst. Durch diese zusätzliche Vermessung der Winkelabhängigkeit der Reflexionssignale kann bei der Erfindung nochmals die Genauigkeit der Analyse der Schneeschichtung verbessert werden.

Durch die gleichzeitige Vermessung der Schneeschichtung sowohl mit elektromagnetischen als auch mit akustischen Messsignalen und durch die Berücksichtigung der Abhängigkeit der physikalischen Parameter der Schneeschichtung vom Einfallswinkel der Messsignale in die Schneeschichtung kann somit bei dem erfindungsgemäße Messverfahren eine Verbesserung der Eindeutigkeit der ermittelten relevanten physikalischen Parameter und damit eine deutlich verbesserte Lawinenvorhersage erreicht werden.

Eine weitere Verbesserung ergibt sich, wenn vorteilhaft das Senden von elektromagnetischen und akustischen Messsignalen auf eine Abfolge von Messpunkten entlang einer vorgegebenen horizontalen Strecke in der Schneeschichtung erfolgt. Durch die Durchführung der erfindungsgemäßen kombinierten Messung entlang eines Profils unter der Schneedecke, das einige Meter lang sein kann, kann auch die räumliche Variation der relevanten physikalischen Parameter der untersuchten Schneeschichtung zuverlässig ermittelt werden. Dabei wird vorteilhaft eine ferngesteuerte oder autonome Verfahrensdurchführung umgesetzt, sodass keine Personen in den lawinengefährdeten Gebieten eingesetzt und gefährdet werden müssen. Die Fernhaltung von Personen aus Gefahrzonen kann vollständig erfolgen, wenn vorteilhaft noch eine telemetrische Übertragung der erfassten Signale von jedem Messpunkt an einen Ort oberhalb der Schneeschichtung erfolgt, wo dann auch die Auswertung der Signale und die Bestimmung der relevanten physikalischen Parameter der Schneeschichtung durchgeführt wird.

Bereits weiter oben wurde ausgeführt, dass die messtechnisch erhaltenen Daten mittels eines Gleichungssystems mit den relevanten physikalischen Parametern der Schneeschichtung gekoppelt werden und mit einem mathematischen Inversionsverfahren bestimmt werden. Dabei sind dem Fachmann Inversionsverfahren grundsätzlich vertraut (vergleiche eingangs zitierter Stand der Technik). Besonders vorteilhaft bei dem erfindungsgemäßen Verfahren ist eine Anwendung eines mathematischen Inversionsverfahrens, bei dem die winkelabhängig ermittelten Werte für die Reflexionskoeffizienten aus den elektromagnetischen und akustischen Mess- und Reflexionssignalen in jedem Messpunkt mit einem Gleichungssystem aus Gleichungen nach Fresnel für die elektromagnetischen Mess- und Reflexionssignale und Gleichungen nach Zoeppritz für die akustischen Mess- und Reflexionssignale gekoppelt werden und daraus winkelabhängig Dichte, Wassergehalt und Zusammensetzung der Schneeschichtung an jedem Messpunkt in jeder Schichtgrenze als relevante physikalische Parameter ermittelt werden. Dabei ist der Umfang des Gleichungssystems abhängig von der Anzahl der zu vermessenden Messpunkte und somit von der Anzahl der vorhanden Schichtgrenzen in der Schneeschichtung, da die Messsignale an jeder Schichtgrenze reflektiert werden und entsprechend viele Reflexionssignale pro Messsignal zu detektieren sind. Weitere Einzelheiten hierzu sind dem speziellen Beschreibungsteil zu entnehmen.

Eine vorteilhafte Messvorrichtung zur Durchführung des zuvor beschriebenen Verfahrens weist unterhalb der Schneeschichtung zumindest einen weiteren aufwärts sendenden Sender, der zum Senden von akustischen Signalen ausgebildet ist, und zumindest einen weiteren abwärts empfangenden Empfänger, der zum Empfangen von akustischen Signalen ausgebildet ist, auf. Dabei sind eine Sendeeinheit mit den Sendern zum Senden der elektromagnetischen und akustischen Messsignale und eine Empfangseinheit mit den Empfängern zum Empfangen der elektromagnetischen und akustischen Reflexionssignale vorgesehen. Die Sendeeinheit ist grundsätzlich räumlich getrennt von der Empfangseinheit angeordnet, um die erfindungsgemäße winkelabhängige Sendung und Detektion der Signale vornehmen zu können. Dabei kann ein Einkanalsystem mit nur einer Sende- und einer Empfangseinheit realisiert werden, wobei diese dann einen veränderlichen Abstand zueinander aufweisen müssen, um unterschiedlichen Einfallswinkel zu erreichen. Bei einem Mehrkanalsystem müssen zumindest eine Sendeeinheit und zumindest zwei Empfangseinheiten vorgesehen sein, um zwei parallele Kanäle zu haben. Es können aber auch beliebig vielen Paare von Sende- und Empfangseinheiten oder auch einzelne Sende- und Empfangseinheiten vorgesehen sein. Der Abstand zwischen allen kann dann fest oder ebenfalls veränderlich sein, wobei zu unterscheiden ist zwischen einem ersten Abstand zwischen jeweils Sendern und Empfängern und einem zweiten Abstand zwischen kompletten Sende- und Empfangseinheiten. Das Mehrkanalsystem bietet gegenüber dem Einkanalsystem den Vorteil der schnelleren Messwerterfassung, da viele Messwege gleichzeitig erzeugt und detektiert werden.

Als besonders kompakte und störunempfindliche Messvorrichtung kann ein kombiniertes Radar-Akustik-System als Sende- und Empfangseinheit eingesetzt werden, wobei auch bei der Kombination von Senden und Empfangen in einem System ein deutlicher Abstand zwischen Sender und Empfänger vorhanden ist, um die erfindungsgemäße winkelabhängige Detektion zu gewährleisten. Die horizontale Verschiebung der Sende- und Empfangseinheiten zueinander und auch entlang einer vorgegebenen Messstrecke zur Profilerfassung kann vorteilhaft über ein Schienensystem realisiert werden. Weiterhin können bei der Messvorrichtung nach der Erfindung vorteilhaft eine Einrichtung zur ferngelenkten oder autonomen Steuerung des Messverfahrens und der Sendeeinheiten und Empfangseinheiten in ihrer horizontalen Position und/oder eine Einrichtung zur Fernübertragung der Daten an einen Ort oberhalb der Schneeschichtung zur Bestimmung der relevanten physikalischen Parameter der Schneeschichtung von jedem Messpunkt vorgesehen sein, um die oben genannten Verfahrensschritte ausführen zu können. Grundsätzliches Ziel dieser Modifikationen ist eine vollständig autonome Verfahrensdurchführung mit einer autonomen Messvorrichtung ohne eine Anwesenheit von Personen in den lawinengefährdeten Gebieten.

## AUSFÜHRUNGSBEISPIELE

Ausbildungsformen von bevorzugten Messanordnungen zur Durchführung des Messverfahrens nach der Erfindung werden nachfolgend anhand der schematischen Figuren zum weiteren Verständnis der Erfindung näher erläutert. Weiterhin werden zusätzliche Erläuterungen zum Messverfahren nach der Erfindung gegeben. Dabei zeigt:

FIGUR 1     eine Messvorrichtung aus dem Stand der Technik,
FIGUR 2     eine Messvorrichtung nach der Erfindung,
FIGUR 3     eine Messvorrichtung nach der Erfindung mit Einkanalsystem und
FIGUR 4     eine Messvorrichtung nach der Erfindung mit Mehrkanalsystem.

Die FIGUR 1 zeigt aus dem Stand der Technik (VERÖFFENTLICHUNG IV) perspektivisch eine bekannte Messvorrichtung 01 zur Durchführung des bekannten Messverfahrens ausschließlich mit elektromagnetischen Signalen unter senkrechtem Einfallswinkel in eine Schneeschichtung 02 (Ausschnitt). Dargestellt ist ein Bodenradargerät 03, das in einem Hohlraum 04 in der Schneeschichtung 02 angeordnet ist und aufwärts schauend sendet. Im Bodenradargerät 03 befindet sich ein Sender 05 zum Senden von elektromagnetischen Messsignalen in unmittelbarer Nachbarschaft zu einem Empfänger 06 zum Empfangen von elektromagnetischen Reflexionssignalen. Damit befinden sich Sender 05 und Empfänger 06 quasi an demselben Ort. Der Einfallswinkel $\Theta$ der Messsignale in die Schneeschichtung 02 ist deshalb ausschließlich senkrecht ($\Theta$ = 90° zur horizontalen Oberfläche). Aus diesem Grund werden vom Empfänger 06 nur Reflexionssignale aufgenommen, die an den oberhalb des Empfängers 06 liegenden horizontalen Schichtgrenzen $LB_i$ in Messpunkten $P_{ij}$ senkrecht zurückgestreut werden. Damit können nur relevante physikalische Parameter der Schneeschichtung 02 angeleitet werden, die sich aus der Amplitude des Reflexionssignals ableiten. Damit bleiben alle Effekte von einem veränderten Einfallswinkel $\Theta$ und Polarisation unberücksichtigt.

In die FIGUR 1 ist weiterhin ein Öffnungswinkel $\Phi$ (ca. 120°) des Senders 05 des Bodenradargeräts 03 eingezeichnet, der die Strahlaufweitung des Messsignals zeigt. Durch den großen Öffnungswinkel $\Phi$ kann es bei der Detektion der Reflexionssignale zur Überlagerung von störenden Streusignalen von den Seiten kommen, die aber durch eine vertikale Verschiebung 07 des Senders 05 über ein Hebelsystem 08 und entsprechende Messungen in unterschiedlichen Höhen kompensiert werden können. Dadurch werden die Signale, die durch die Sendeantenne bzw. das System selbst erzeugt werden von den eigentlichen Reflexionssignalen getrennt. Eine Horizontalverschiebung ist bei dem gezeigten Bodenradargerät 03 nicht vorgesehen, kann allerdings in einem Bereich von nur wenigen Zentimetern ebenfalls vorgenommen werden, um auch die Streusignale zu kompensieren.

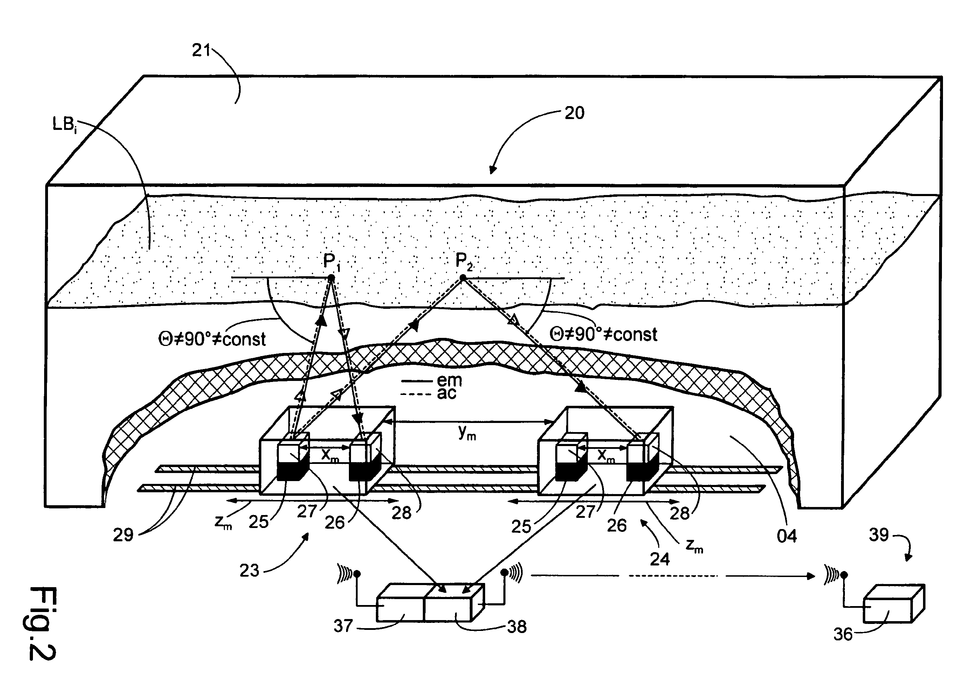

Im Gegensatz dazu zeigt die FIGUR 2 perspektivisch eine vorteilhafte Messvorrichtung 20 nach der Erfindung mit einer winkelabhängigen, kombinierten Messung in einer Schneeschichtung 21 (Ausschnitt) mit zumindest einer Schichtgrenze $LB_l$ als Diskontinuitätsfläche von relevanten physikalischen Parametern (z.B. Dichte oder elektrische Leitfähigkeit). Unterhalb der Schneeschichtung 21 sind in einem Hohlraum 04 zwei aktive kombinierte Radar-Akustik-Systeme 23, 24 angeordnet. Jedes System 23, 24 verfügt über einen elektromagnetischen (em) Sender 25 und einen elektromagnetischen (em) Empfänger 26 (Radarsystem) und einen akustischen (ac) Sender 27 und einen akustischen (ac) Empfänger **28** (Akustiksystem). Dabei sind aber Sender **25, 27** und Empfänger **26, 28** gleicher Signalformen nicht am selben Ort angeordnet, um winkelabhängige Messungen ($\Theta \neq 90° \neq const$) durchführen zu können. Sender **25, 27** der unterschiedlichen Signalformen und Empfänger **26, 28** der unterschiedlichen Signalformen oder Sender **25, 27** und Empfänger **26, 28** der unterschiedlichen Signalformen können dagegen am selben Ort angeordnet sein.

Da bei den dargestellten kombinierten Radar-Akustik-Systemen **23, 24** die Anordnung aller vorhandenen Sender **25, 27** und Empfänger **26, 28** fest zueinander ist, sind für einen veränderten Abstand bzw. Einfallswinkel $\Phi$ zumindest zwei unabhängige Radar-Akustik-Systeme **23, 24** erforderlich. Es ergeben sich dann unterschiedliche Einfallswinkel $\Phi_1$, $\Phi_2$ an unterschiedlichen Messpunkten $P_1$, $P_2$. Zur horizontalen Einstellung eines variablen zweiten Abstands $Y_m$ zwischen den beiden Radar-Akustik-Systemen **23, 24** ist ein horizontales Schienensystem **29** mit einer größeren Längserstreckung im Meterbereich vorgesehen. Durch die winkelabhängige Messung werden störende Streusignale automatisch kompensiert, eine vertikale Höhenveränderung des Messsysteme **23, 24** ist daher bei der Erfindung nicht erforderlich. Gleichzeitig dient das Schienensystem **29** auch der parallelen Verschiebbarkeit der Radar-Akustik-Systeme **23, 24** um eine variable Verschiebung $Z_m$ oder der einzelnen Sender **25, 27** und Empfänger **26, 28** einen variablen ersten Abstand $X_m$, wenn diese nicht in einem gemeinsamen System vereint sind. Dadurch können mit der Messvorrichtung **20** neben winkelabhängigen Messungen auch bei einer gleichzeitigen, mehrmaligen Verschiebung von einander zugeordneten Sendern **25, 27** und Empfängern **26, 28** (Paar **25, 27** und Paar **26, 28**) Profilmessungen entlang der Schichtgrenze $LB_i$ durchgeführt werden.

Weiterhin sind in der **FIGUR 2** noch eine Steuereinrichtung **37** zur ferngelenkten oder autonomen Verfahrensdurchführung und eine Übertragungseinrichtung **38** zur Übertragung von erfassten Daten an einen Ort **39** außerhalb der Schneeschichtung **21** zur Bestimmung der relevanten physikalischen Parameter in einer Auswerteeinheit **36** schematisch dargestellt.

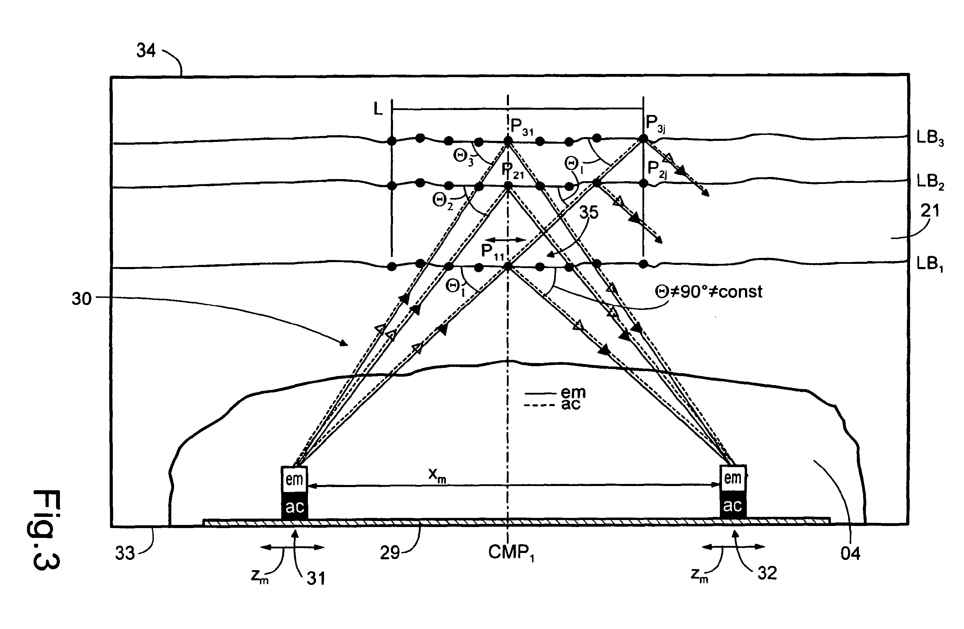

In der **FIGUR 3** ist schematisch ein Einkanalsystem **30** mit einer kombinierten Sendeeinheit **31** und einer kombinierten Empfangseinheit **32** dargestellt, zwischen denen ein erster Abstand $X_m$ variabel einstellbar ist. Sendeeinheit **31** und Empfangseinheit **32** werden auf dem Schienensystem **29** auf dem Untergrund **33** unabhängig voneinander bewegt. Bei einer planparallelen Schneeschichtung **21** findet eine Reflexion des Messsignals mit Wellencharakter an jeder Schichtgrenze $LB_i$ (in der **FIGUR 3** sind beispielhaft drei Schichtgrenzen $LB_1$, $LB_2$, $LB_3$ eingezeichnet) unterhalb der Oberfläche **34** genau auf der Mittelachse in der Mitte zwischen der Sendeeinheit **31** und der Empfangseinheit **32** in Messpunkten $P_{11}$, $P_{21}$ und $P_{31}$ jeweils unter unterschiedlichen Sendewinkeln $\Theta \neq 90°$ statt. Exemplarisch eingezeichnet sind auch Messpunkte $P_{1j}$, $P_{2j}$ und $P_{3j}$ unter demselben Sendewinkel zu den verschiedenen Schichtgrenzen $LB_1$, $LB_2$, $LB_3$, die aber von nicht weiter dargestellten Empfängern an entsprechend anderen Orten symmetrisch zur Mittelachse empfangen werden. Bei der Mittelachse handelt es sich um den in der Geophysik so genannten "Common Midpoint" (**CMP,** in der Geophysik jedoch von der Oberfläche **34** in Richtung Untergrund **33** gemessen). Wird der erste Abstand $X_m$ zwischen der Sendeeinheit **31** und der Empfangseinheit **32** zur Mittelachse bzw. zum **CMP** symmetrisch vergrößert, so verändert sich der Einfallswinkel $\Phi$ in die jede Schichtgrenze $LB_i$ in jedem Messpunkt $P_{ij}$. Bei einer unsymmetrischen oder gleichzeitigen Verschiebung von Sendeeinheit **31** und der Empfangseinheit **32** um den ersten Abstand $X_m$ oder die Verschiebung $Z_m$ verändert sich hingegen die Position des **CMP,** wodurch ein Profil **35** von Messpunkten $P_{ij}$ der Länge L an jeder Schichtgrenze $LB_i$ erfasst werden kann.

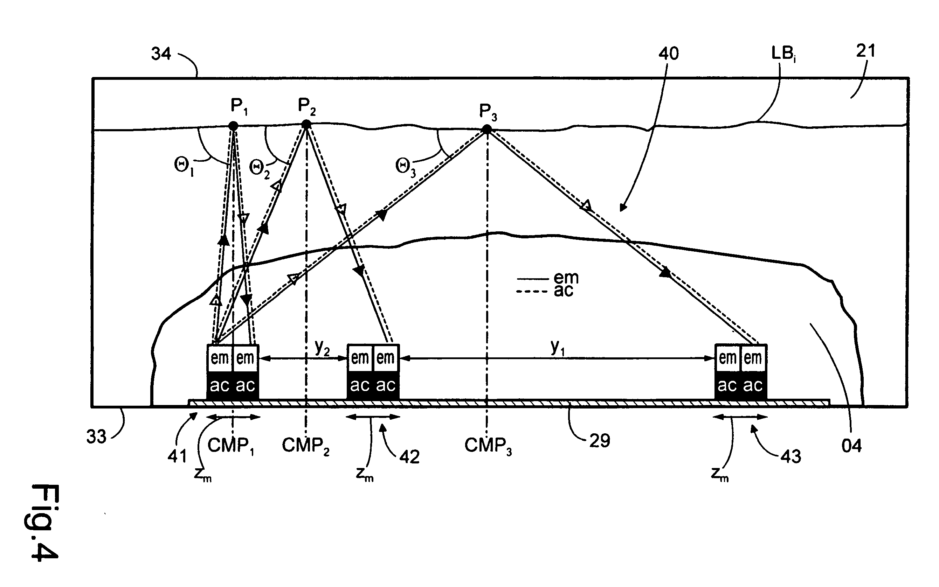

In der **FIGUR 4** ist schematisch ein Mehrkanalsystem **40** mit drei kombinierten Sende-Empfangs-Systemen **41, 42, 43** dargestellt. Es können auch einzelne Sendeeinheiten und Empfangseinheiten verwendet werden, die alle unabhängig voneinander verschoben werden können. Eingezeichnet sind die zu den Sende-Empfangs-Systemen **41, 42, 43** zugehörigen Mittenachsen $CMP_1$, $CMP_2$ und $CMP_3$, an denen das Messsignal der Sendeeinheit des Sende-Empfangssystems **41** an der Schichtgrenze $LB_i$ reflektiert und von den Empfängern der Sende-Empfangs-Systemen **41, 42, 43** detektiert wird. Zu erkennen sind die sich ergebenden, unterschiedlichen Einfallswinkel $\Phi_1$, $\Phi_2$, $\Phi_3$ in die Schichtgrenze $LB_i$. Analoges gilt für die Messsignale der Sendeeinheiten der Sende-Empfangssysteme **42, 43,** die von den Empfangseinheiten detektiert werden. Jedes der Messsignale ist auf einem anderen Strahlweg über eine Reflexion an der Schichtgrenze $LB_i$ zu einem Empfänger gelangt und wurde damit an der Schichtgrenze $LB_i$ an verschiedenen Messpunkten $P_1$, $P_2$, $P_3$ und mit unterschiedlichen Einfalls- bzw. Reflexionswinkeln $\Phi_1$, $\Phi_2$, $\Phi_3$ reflektiert. Auch hier kann durch Variieren der Verschiebung $Z_m$ ein vollständiges Profil der Schneeschichtung **21** erstellt werden.

Das Mehrkanalverfahren ist also analog zum Einkanalverfahren zu sehen und liefert die gleichen Daten. Mehrkanalsysteme weisen aber mehrere Sende-Empfangspaare oder einzelne kombinierte Sender bzw. Empfänger auf, die alle separat und unabhängig von den anderen bewegt werden können und unterschiedliche Messwege erzeugen. Damit können beim Mehrkanalverfahren eine Vielzahl von Messungen gleichzeitig durchgeführt werden, was gegenüber dem Einkanalverfahren eine große Messzeiteinsparung bedeutet.

Nachdem zuvor ausführlich auf vorteilhafte Ausführungsformen der Messvorrichtung zur Durchführung des aktiven Messverfahrens nach der Erfindung eingegangen wurde, soll abschließend in einem Überblick auf die physikalischen und mathematischen Grundlagen des aktiven Messverfahrens eingegangen werden. Dabei wird das Verhalten der Signale an einer Schichtgrenze beschrieben. Bei mehreren Grenzschichten werden zusätzlich die Intervalllaufzeiten der einzelnen Schichtgrenzen berücksichtigt, wobei es sich aber um ein in der Geophysik bekanntes Verfahren handelt.

Durch die Berechnung an mehreren Schichtgrenzen erweitert sich das Gleichungssystem entsprechend und wird damit in der Ermittlung der relevanten physikalischen Parameter der Schneeschichtung noch genauer.

Die Grundlage für die Beschreibung elektromagnetischer Phänomene bilden die Maxwellschen Gleichungen mit einer Berücksichtigung der elektrischen Feldstärke, der dielektrischen Verschiebungsdichte, der magnetischen Feldstärke und der magnetischen Flussdichte. Der Übergang zum Wellencharakter wird dann durch die Helmholtz-Gleichungen beschrieben, wobei die Dämpfung der Wellen im Wesentlichen durch die elektrische Leitfähigkeit des zu durchdringenden Mediums bestimmt wird. Für das beanspruchte aktive Messverfahren mit einer Durchdringung von Schnee ist in der Regel eine schwache Dämpfung gegeben, bei der eine Wellenausbreitung stattfindet. Die Wellengleichung für akustische Wellen lässt sich aus der Verknüpfung der Elastizität, Spannung und dem 2.Newtonschen Gesetz mit dem Hookeschen Gesetz ableiten. Die seismischen Geschwindigkeiten für Kompressions- und Scherwellen können abgeleitet werden. Partielle Reflexion an Schichtgrenzen tritt auf, wenn sich die Impedanz des entsprechenden Wellentyps ändert. Dies geschieht nach der Gleichung

$$R = \frac{A_r}{A_0} = \frac{Z_2 - Z_1}{Z_2 + Z_1}$$

mit R = Reflexionskoeffizient, T = Transmissionskoeffizient (T=1-R), A = Amplitude, Z = Impedanz, 0 = einfallende Welle und r = reflektierte Welle und gilt für elektromagnetische und akustische Wellen gleichermaßen. An ebenen Grenzflächen zwischen zwei Medien gilt zudem das Snelliussche Brechungsgesetz mit einer Berücksichtigung der Einfallswinkel in Abhängigkeit vom Wellentyp. Tritt nun eine elektromagnetische Welle aus einer beliebigen Richtung auf eine dielektrische Grenzfläche, d.h. eine Fläche, an der sich die intrinsische Impedanz der Welle ändert, so verhält sie sich unabhängig von ihrer Polarisation entsprechend dem Snelliusschen Brechungsgesetz sowie dem Reflexionsgesetz.

Die weiteren Betrachtungen beziehen sich nur auf das Fernfeld, d.h. die geometrischen Abmessungen der Sender sind klein gegen den Abstand des reflektierenden Mediums vom Sender, was bei dem Messverfahren nach der Erfindung in der Regel der Fall ist. Das Verhältnis der Energie der einfallenden welle und derjenigen reflektierten Welle wird durch den oben gezeigten Reflexionskoeffizienten R bezüglich der Amplituden wiedergegeben. Der übrige Anteil wird durch die Grenzfläche transmittiert. Bei der elektromagnetischen Welle ist dann noch zu unterscheiden, ob der elektrische Feldvektor senkrecht (TE Mode transversal elektrische Mode) oder parallel (TM Mode transversalmagnetische Mode) zur Einfallsebene der Welle orientiert ist Polarisationsebenen). Nach den Fresnelschen Formeln ergibt sich dann für die TE-Mode des elektromagnetischen Messsignals für Reflexion und Transmission (TM-Mode analog):

$$R_{TE} = \frac{\mu_2 k_1 \cos\Theta_e - \mu_1 \sqrt{k_2^2 - k_1^2 \sin^2\Theta_e}}{\mu_2 k_1 \cos\Theta_e + \mu_1 \sqrt{k_2^2 - k_1^2 \sin^2\Theta_e}}$$

$$T_{TE} = \frac{2\mu_2 k_1 \cos\Theta_e}{\mu_2 k_1 \cos\Theta_e + \mu_1 \sqrt{k_2^2 - k_1^2 \sin^2\Theta_e}}$$

mit $\Theta_e$ als Einfallswinkel, k als kehrwert der Kompressibilität des Mediums und den Indizes 1 und 2 für die unterschiedlichen Medien. Die magnetische Permeabilität des zu durchdringenden Mediums kann im Falle von Schnee vernachlässigt werden.

Die akustische Impedanz eines Mediums wird durch die Ausbreitungsgeschwindigkeit im Medium und durch dessen Dichte beschrieben. Die allgemeine Form der Reflexionskoeffizienten wird durch die hochgradig nichtlineare Zoeppritz-Gleichung beschrieben. Diese lautet in einer Näherung

$$R(\Theta) = \frac{1}{2\cos^2(\Theta)} I_p - 4\gamma^2 \sin^2(\Theta) I_s + \left(2\gamma^2 \sin^2(\Theta) - 0,5\tan^2(\Theta)\right) D$$

mit

$$I_p = \left(\frac{\Delta v_p}{v_p} + \frac{\Delta \rho}{\rho}\right); \quad I_s = \left(\frac{\Delta v_s}{v_s} + \frac{\Delta \rho}{\rho}\right); \quad D = \frac{\Delta \rho}{\rho}; \quad \Delta v_p = v_{p2} - v_{p1};$$

$$\Delta v_s = v_{s2} - v_{s1}; \quad \Delta \rho = \rho_2 - \rho_1; \quad v_p = \frac{1}{2}\left(v_{p2} + v_{p1}\right); \quad v_s = \frac{1}{2}\left(v_{s2} + v_{s1}\right)$$

und

$$\rho = \frac{1}{2}\left(\rho_2 + \rho_1\right).$$

Die relativen Unterschiede in der Impedanz der p-Welle (Druckwelle), der s-Welle (Scherwelle) und der Dichte sind durch $I_p$, $I_s$ und D gegeben. $\Theta$ ist der Reflexionswinkel und $\gamma$ ist ein Schätzwert für das Verhältnis zwischen der Scherwellen- und der Kompressionswellengeschwindigkeit. Von besonderer Wichtigkeit für die so genannte Amplitudenvariation mit Auslage-Analyse (amplitude variation with offset - AVO) sind Nulldurchgänge des Reflexionskoeffizienten, d.h. eine Phasenumkehr des reflektierten Messsignals (Reflexionssignal).

Zum Abschluss sollen noch die relevanten Parameterräume der Schneeschichtung für die Elektromagnetik und die Akustik kurz betrachtet werden.

Bei der Elektromagnetik sind es die dielektrischen Eigenschaften der unterschiedlichen Materialien bzw. deren Mischungen, die für die Vermessung von Schichtgrenzen in der Schneeschichtung eine Rolle spielen. Die Dielektrizitätszahl von Luft ist nahezu identisch 1, d.h. es tritt keine Polarisation im freien Raum auf. Die elektrische Leitfähigkeit ist Null. Für polare Materialien wie Wasser ($H_2O$ in flüssiger Phase) kommt zusätzlich zur elektronischen und ionischen Polarisation noch die dipolare Polarisation hinzu, die sich in einer wesentlich höheren Dielektrizitätskonstante manifestiert. Bei Eis ($H_2O$ in fester Phase) ist durch die Bindung der Moleküle in das Kristallgitter der Verlauf der Dielektrizitätszahl unkritisch. Eine Besonderheit stellt jedoch deren Anisotropie dar, die jedoch im Radiowellenbereich, also bei der Vermessung von Schichtgrenzen in Schnee zu vernachlässigen ist. Die physikalischen Eigenschaften von Eis sind hinlänglich im Stand der Technik beschrieben. Schnee stellt ein poröses Gemisch aus Eis, Luft und einem geringen Anteil flüssigen Wassers dar. Die dielektrischen Eigenschaften lassen sich daher aus den Volumenanteilen der einzelnen Komponenten berechnen. Schwachschichten in der Schneedecke zeichnen sich u.a. durch einen Dichtekontrast und anderer Zusammensetzung/Struktur zum umgebenden Schnee aus. Mit zunehmender Dichte steigt die Dielektrizitätskonstante von Schnee an. Trockener Schnee hat eine wesentlich geringere Dielektrizitätskonstante als nasser oder gesättigter Schnee.

Prinzipiell muss bei der Verwendung von akustischen (seismischen) Methoden die Natur der beiden fundamentalen Wellentypen (Druck- bzw. Longitudinalwellen und Scher- bzw. Transversalwellen) beachtet werden. Diese unterscheiden sich hinsichtlich ihres Auftretens und ihrer Ausbreitungsgeschwindigkeit zum Teil erheblich. In Gasen oder Flüssigkeiten existieren keine Scherwellen. Dagegen breiten sich die Druckwellen in Gasen mit leichter Abhängigkeit von Temperatur, Dichte und Feuchtigkeit aus. In Wasser breiten sie sich mit ca. dreifacher Geschwindigkeit gegenüber ihrer Ausbreitung in Gas aus. In Eis treten beide Wellentypen auf, dabei ist ihre Ausbreitungsgeschwindigkeit von der Eistemperatur abhängig. Dagegen hängen die Ausbreitungsgeschwindigkeiten in Schnee im Wesentlichen von dessen Dichte, aber auch vom Wasseranteil ab.

**BEZUGSZEICHENLISTE**

01    Messvorrichtung (Stand der Technik)
02    Schneeschichtung
03    Bodenradargerät
04    Hohlraum
05    elektromagnetischer Sender
06    elektromagnetischer Empfänger
07    vertikale Verschiebung
08    Hebelsystem

20    Messvorrichtung
21    Schneeschichtung
23    Radar-Akustik-System
24    Radar-Akustik-System
25    elektromagnetischer Sender
26    elektromagnetischer Empfänger
27    akustischer Sender
28    akustischer Empfänger
29    Schienensystem
30    Einkanalsystem
31    kombinierte Sendeeinheit
32    kombinierte Empfangseinheit
33    Untergrund
34    Oberfläche
35    Profil
36    Auswerteeinrichtung
37    Steuereinrichtung
38    Übertragungseinrichtung
39    Ort außerhalb der Schneeschichtung

40    Mehrkanalsystem
41    kombiniertes Sende-Empfangs-System
42    kombiniertes Sende-Empfangs-System
43    kombiniertes Sende-Empfangs-System

$\Theta$      Einfallswinkel
$\Phi$      Öffnungswinkel
ac      akustisches Signal
CMP      gemeinsamer Mittelpunkt (Common MidPoint)
const      konstant
em      elektromagnetisches Signal
L      Länge Profil
$LB_i$      Schichtgrenze
$P_{ij}$      Messpunkt (jter Messpunkt in der iten Schichtgrenze)
$X_m$      variabler erster Abstand zwischen Sender und Empfänger
$Y_m$      variabler zweiter Abstand zwischen Sende-Empfangs-Systemen
$Z_m$      variable Verschiebung von Sender und Empfänger oder Sende- Empfangs-System


**Patentansprüche**

1.    Messverfahren zur zerstörungsfreien Analyse einer Schneeschichtung (21) durch Ermitteln des Reflexionsverhaltens von Messsignalen zu Messpunkten ($P_{ij}$) in horizontalen Schichtgrenzen ($LB_i$) in der Schneeschichtung (21) mittels

    • Senden zumindest eines Messsignals in Aufwärtsrichtung von unterhalb der Schneeschichtung (21) zu Messpunkten ($P_{ij}$),
    • Empfangen von Reflexionssignalen in Abwärtsrichtung unterhalb der Schneeschichtung (21) von den Messpunkten ($P_{ij}$),

• Ermitteln von Reflexionskoeffizienten, Phasenverschiebungen und Signallaufzeiten aus den Mess- und Reflexionssignalen in den Messpunkten (P$_{ij}$) und
• Bestimmen von relevanten physikalischen Parametern der Schneeschichtung (21) in den Messpunkten (P$_{ij}$) in Abhängigkeit von den ermittelten Reflexionskoeffizienten, Phasenverschiebungen und Signallaufzeiten,

mit Einsetzen von elektromagnetischen (em) Messsignalen,
**GEKENNZEICHNET DURCH**
zusätzliches Einsetzen von zu den elektromagnetischen (em) Messsignalen örtlich und zeitlich kongruenten akustischen (ac) Messsignalen zu den Messpunkten (P$_{ij}$) und

• winkelabhängiges Senden der elektromagnetischen und akustischen Messsignale mit einer Variation des Einfallswinkels (Θ) in die Messpunkte (P$_{ij}$),
• winkelabhängiges Empfangen von elektromagnetischen (em) und akustischen (ac) Reflexionssignalen von den Messpunkten (P$_{ij}$),
• winkelabhängiges Ermitteln der Reflexionskoeffizienten, Phasenverschiebungen und Signallaufzeiten aus den elektromagnetischen (em) und akustischen (ac) Mess- und Reflexionssignalen in den Messpunkten (P$_{ij}$),
• Koppeln der winkelabhängig ermittelten Reflexionskoeffizienten, Phasenverschiebungen und Signallaufzeiten aus den elektromagnetischen (em) und akustischen (ac) Mess- und Reflexionssignalen in einem mathematischen Gleichungssystem und **durch**
• Lösen des Gleichungssystems mit einem Inversionsverfahren zum Bestimmen der relevanten physikalischen Parameter der Schneeschichtung (21) in den Messpunkten (P$_{ij}$) in den Schichtgrenzen (LB$_i$).

2. Messverfahren nach Anspruch 1,
   **GEKENNZEICHNET DURCH**
   Senden von elektromagnetischen (em) und akustischen (ac) Messsignalen in Aufwärtsrichtung von unterhalb der Schneeschichtung (21) auf eine Abfolge von Messpunkten (P$_{ij}$) entlang einer vorgegebenen horizontalen Strecke mit einer Länge (L) im Meterbereich in der Schneeschichtung (21) zur Profilerstellung.

3. Messverfahren nach Anspruch 1,
   **GEKENNZEICHNET DURCH**
   eine ferngesteuerte oder autonome Verfahrensdurchführung.

4. Messverfahren nach Anspruch 1,
   **GEKENNZEICHNET DURCH**
   eine telemetrische Übertragung der Mess- und Reflexionssignale an einen Ort oberhalb der Schneeschichtung (21) zur Bestimmung der physikalischen Parameter der Schneeschichtung (21).

5. Messverfahren nach Anspruch 1,
   **GEKENNZEICHNET DURCH**
   die Anwendung eines mathematischen Inversionsverfahrens, bei dem die winkelabhängig ermittelten Werte für die Reflexionskoeffizienten aus den elektromagnetischen (em) und akustischen (ac) Mess- und Reflexionssignalen in jedem Messpunkt (P$_{ij}$) mit einem Gleichungssystem aus Gleichungen nach Fresnel für die elektromagnetischen (em) Mess- und Reflexionssignale und Gleichungen nach Zoeppritz für die akustischen (ac) Mess- und Reflexionssignale gekoppelt werden und daraus winkelabhängig Dichte, Wassergehalt und Zusammensetzung der Schneeschichtung (21) an jedem Messpunkt (P$_{ij}$) in jeder Schichtgrenze (LB$_i$) als relevante physikalische Parameter ermittelt werden.

6. Messvorrichtung (20) zur zerstörungsfreien Analyse einer Schneeschichtung (21) durch Ermitteln des Reflexionsverhaltens von Messsignalen an Messpunkten (P$_{ij}$) in Schichtgrenzen (LB$_i$) in der Schneeschichtung (21) mit zumindest einem von unterhalb der Schneeschichtung (21) aufwärts sendenden Sender (25), einem unterhalb der Schneeschichtung (21) abwärts empfangenden Empfänger (26) und einer Auswerteeinrichtung (36) für die Mess- und die Reflexionssignale, wobei der Sender (25) zum Senden und der Empfänger (26) zum Empfangen von elektromagnetischen (em) Signalen ausgebildet ist, zur Durchführung des Messverfahrens nach den Ansprüchen 1 bis 5,
   **GEKENNZEICHNET DURCH**

   • zumindest einen weiteren von unterhalb der Schneeschichtung (21) aufwärts sendenden Sender (27), der zum Senden von akustischen (ac) Signalen ausgebildet ist, und zumindest einen weiteren unterhalb der Schneeschichtung (21) abwärts empfangenden Empfänger (28), der zum Empfangen von akustischen (ac) Signalen ausgebildet ist,
• zumindest eine Sendeeinheit (31) mit dem Sender (25) zum Senden von elektromagnetischen (em) Messsignalen und dem Sender (27) zum Senden von akustischen (ac) Messsignalen,
• zumindest eine Empfangseinheit (32) mit dem Empfänger (26) zum Empfangen von elektromagnetischen (em) Reflexionssignalen und dem Empfänger (28) zum Empfangen von akustischen (ac) Reflexionssignalen und **durch**
• eine räumlich getrennte Anordnung der Sendeeinheit (31) von der Empfangseinheit (32) mit einem veränderlichen Abstand ($X_m$) bei einem Einkanalsystem (30) mit genau einer Sendeeinheit (31) und einer Empfangseinheit (32) oder einem festen oder ersten oder zweiten veränderlichen Abstand ($X_m$, $Y_m$) bei einem Mehrkanalsystem (40) mit einer oder mehreren Sendeeinheiten (31) und mehreren Empfangseinheiten (32).

7. Messvorrichtung nach Anspruch 6,
   **GEKENNZEICHNET DURCH**
   Einsetzen von zumindest zwei kombinierten Radar-Akustik-Systemen (23, 24) als Sende- und Empfangseinheiten (31, 32) mit einem veränderlichen Abstand ($Y_m$) zueinander, wobei jedes kombinierte Radar-Akustik-System (23, 24) über einen elektromagnetischen (em) Sender (25) und einen elektromagnetischen (em) Empfänger (26; Radarsystem) und einen akustischen (ac) Sender (27) und einen akustischen (ac) Empfänger (28; Akustiksystem) verfügt.

8. Messvorrichtung nach Anspruch 6 oder 7,
   **GEKENNZEICHNET DURCH**
   ein Schienensystem (29) zur horizontalen Verschiebung der Sende- und Empfangseinheiten (31, 32) um den ersten veränderlichen Abstand ($X_m$) und/oder der kombinierten Radar-Akustik-Systemen (23, 24) um den zweiten veränderlichen Abstand ($Y_m$) und/oder um eine Verschiebung ($Z_m$) zum parallelen Verschieben der Sende- und Empfangseinheiten (31, 32) oder kombinierten Radar-Akustik-Systemen (23, 24) zur Profilerstellung.

9. Messvorrichtung nach Anspruch 6,
   **GEKENNZEICHNET DURCH**
   eine Steuereinrichtung (37) zur ferngelenkten oder autonomen Steuerung des Messverfahrens und der Sende- und Empfangseinheiten (31, 32) in ihrer horizontalen Position unterhalb der Schneeschichtung (21).

10. Messvorrichtung nach Anspruch 6,
    **GEKENNZEICHNET DURCH**
    eine Übertragungseinrichtung (38) zur Fernübertragung der Mess- und Reflexionssignale an einen Ort (39) oberhalb der Schneeschichtung (21).

**Claims**

1. A measuring method for the destruction-free analysis of a snow stratification (21) by determining the reflection behaviour of measurement signals at measurement points ($P_{ij}$) in horizontal layer boundaries ($LB_i$) in the snow stratification (21) by

   ■ transmission of at least one measurement signal in the upward direction from beneath the snow stratification (21) at measurement points ($P_{ij}$),
   ■ reception of reflection signals in the downward direction beneath the snow stratification (21) at the measurement points ($P_{ij}$),
   ■ determination of reflection coefficients, phase shifts and signal propagation times from the measurement and reflection signals at the measurement points ($P_{ij}$) and
   ■ determination of relevant physical parameters of the snow stratification (21) at the measurement points ($P_{ij}$) as a function of the determined reflection coefficients, phase shifts and signal propagation times,

   with the use of electromagnetic (em) measurement signals,
   **CHARACTERISED BY**
   the additional use of acoustic (ac) measurement signals at the measurement points ($P_{ij}$), said acoustic measurement signals being locally and temporally congruent with the electromagnetic (em) measurement signals and

   ■ angle-dependent transmission of the electromagnetic and acoustic measurement signals with a variation of the angle of incidence (θ) at measurement points ($P_{ij}$),

■ angle-dependent reception of electromagnetic (em) and acoustic (ac) reflection signals from the measurement points ($P_{ij}$),

■ angle-dependent determination of the reflection coefficients, phase shifts and signal propagation times from the electromagnetic (em) and acoustic (ac) measurement and reflection signals at the measurement points ($P_{ij}$),

■ coupling of the reflection coefficients, phase shifts and signal propagation times determined angle-dependent from the electromagnetic (em) and acoustic (ac) measurement and reflection signals in a mathematical system of equations and

by

■ solving the system of equations with an inversion procedure for determining the relevant physical parameters of the snow stratification (21) at the measurement points ($P_{ij}$) in the layer boundaries ($LB_i$).

2. The measuring method according to claim 1,
   **CHARACTERISED BY**
   the transmission of electromagnetic (em) and acoustic (ac) measurement signals in the upward direction from beneath the snow stratification (21) at a sequence of measurement points ($P_{ij}$) along a predetermined horizontal section with a length (L) in the metre range in the snow stratification (21) for the preparation of a profile.

3. The measuring method according to claim 1,
   **CHARACTERISED BY**
   a remote-controlled or autonomous performance of the method.

4. The measuring method according to claim 1,
   **CHARACTERISED BY**
   a telemetric transmission of measurement and reflection signals at a site above the snow stratification (21) in order to determine the physical parameters of the snow stratification (21).

5. The measuring method according to claim 1,
   **CHARACTERISED BY**
   the use of a mathematical inversion procedure, wherein the values for the reflection coefficients determined angle-dependent from the electromagnetic (em) and acoustic (ac) measurement and reflection signals at each measurement point ($P_{ij}$) are coupled by a system of equations comprising equations according to Fresnel for the electromagnetic (em) measurement and reflection signals and equations according to Zoeppritz for the acoustic (ac) measurement and reflection signals and the density, water content and composition of the snow stratification (21) at each measurement point ($P_{ij}$) in each layer boundary ($LB_i$) are determined angle-dependent therefrom as relevant physical parameters.

6. A measuring device (20) for the destruction-free analysis of a snow stratification (21) by determining the reflection behaviour of measurement signals at measurement points ($P_{ij}$) in layer boundaries ($LB_i$) in the snow stratification (21) by means of at least one transmitter (25) transmitting upwards from beneath the snow stratification (21), a receiver (26) receiving downwards beneath the snow stratification (21) and an evaluation device (36) for the measurement and reflection signals, wherein the transmitter (25) is designed for the transmission and the receiver (26) for the reception of electromagnetic (em) signals, for performing the measuring method according to claims 1 to 5
   **CHARACTERISED BY**

   ■ at least one further transmitter (27), which transmits upwards from beneath the snow stratification (21) and is designed for the transmission of acoustic (ac) signals, and at least one further receiver (28), which receives downwards beneath the snow stratification (21) and is designed for the reception of acoustic (ac) signals,

   ■ at least one transmission unit (31) with the transmitter (25) for the transmission of electromagnetic (em) measurement signals and the transmitter (27) for the transmission of acoustic (ac) measurement signals,

   ■ at least one reception unit (32) with the receiver (26) for the reception of electromagnetic (em) reflection signals and the receiver (28) for the reception of acoustic (ac) reflection signals, and by

   ■ a spatially separate arrangement of the transmission unit (31) from the reception unit (32) with a variable distance ($X_m$) in the case of a single-channel system (30) with precisely one transmission unit (31) and one reception unit (32) or a fixed or first or second variable distance ($X_m$, $Y_m$) in the case of a multi-channel system (40) with one or more transmission units (31) and a plurality of reception units (32).

7. The measuring device according to claim 6,

**CHARACTERISED BY**
the use of at least two combined radar-acoustic systems (23, 24) as transmission and reception units (31, 32) with a variable distance ($Y_m$) from one another, wherein each combined radar-acoustic system (23, 24) comprises an electromagnetic (em) transmitter (25) and an electromagnetic (em) receiver (26; radar system) and an acoustic (ac) transmitter (27) and an acoustic (ac) receiver (28; acoustic system).

**8.** The measuring device according to claim 6 or 7,
**CHARACTERISED BY**
a rail system (29) for the horizontal displacement of the transmission and reception units (31, 32) by the first variable distance ($X_m$) and/or the combined radar-acoustic systems (23, 24) by the second variable distance ($Y_m$) and/or by a displacement ($Z_m$) for the parallel displacement of the transmission and reception units (31, 32) or combined radar-acoustic systems (23, 24) for the preparation of a profile.

**9.** The measuring according to claim 6,
**CHARACTERISED BY**
a control device (37) for the remote-controlled or autonomous control of the measuring method and the transmission and reception units (31, 32) in their horizontal position beneath the snow stratification (21).

**10.** The measuring device according to claim 6,
**CHARACTERISED BY**
a transmission device (38) for the remote transmission of the measurement and reflection signals to a site (39) above the snow stratification (21).

**Revendications**

**1.** Procédé de mesure pour l'analyse sans destruction d'une couche de neige (21) par détermination du comportement à la réflexion de signaux de mesure en des points de mesure ($P_{ij}$) dans des limites de couche horizontales ($LB_i$) dans la couche de neige (21) au moyen de

- envoi d'au moins un signal de mesure dans le sens ascendant allant de au-dessous de la couche de neige (21) vers des points de mesure ($P_{ij}$),
- réception de signaux de réflexion dans le sens descendant au-dessous de la couche de neige (21) à partir des points de mesure ($P_{ij}$),
- détermination de coefficients de réflexion, décalages de phase et temps de propagation de signal à partir des signaux de mesure et de réflexion aux points de mesure ($P_{ij}$) et
- détermination de paramètres physiques importants de la couche de neige (21) aux points de mesure ($P_{ij}$) en fonction des coefficients de réflexion, des décalages de phase et temps de propagation de signal déterminés,

avec l'utilisation de signaux de mesure électromagnétiques,
**caractérisé par**
l'utilisation supplémentaire de signaux de mesure acoustiques (ac) congruents localement et dans le temps par rapport aux signaux de mesure électromagnétiques (em) aux points de mesure ($P_{ij}$) et

- émission dépendant de l'angle des signaux de mesure électromagnétiques et acoustiques avec une variation de l'angle d'incidence ($\Phi$) aux points de mesure ($P_{ij}$),
- réception dépendante de l'angle de signaux de réflexion électromagnétiques (em) et acoustiques (ac) provenant des points de mesure ($P_{ij}$),
- détermination en fonction de l'angle des coefficients de réflexion, décalages de phase et temps de propagation de signal à partir des signaux de mesure et de réflexion électromagnétiques (em) et acoustiques (ac) aux points de mesure ($P_{ij}$),
- couplage des coefficients de réflexion, décalages de phase et temps de propagation de signal déterminés en fonction de l'angle à partir des signaux de mesure et de réflexion électromagnétiques (em) et acoustiques (ac) dans un système d'équations mathématique et par
- résolution du système d'équations avec un procédé d'inversion pour déterminer les paramètres physiques importants de la couche de neige (21) aux points de mesure ($P_{ij}$) dans des limites de couche ($LB_i$).

**2.** Procédé de mesure selon la revendication 1,

**caractérisé par**
l'envoi de signaux de mesure électromagnétiques (em) et acoustiques (ac) dans le sens ascendant à partir d'au-dessous de la couche de neige (21) suite à une succession de points de mesure ($P_{ij}$) le long d'un tronçon horizontal prédéfini avec une longueur (L) de l'ordre du mètre dans la couche de neige (21) pour l'établissement du profil.

3. Méthode de mesure selon la revendication 1,
**caractérisée par**
une mise en oeuvre du procédé télécommandé ou autonome.

4. Méthode de mesure selon la revendication 1,
**caractérisée par**
une transmission télémétrique des signaux de mesure et de réflexion en un lieu au-dessus de la couche de neige (21) pour la détermination des paramètres physiques de la couche de neige (21).

5. Méthode de mesure selon la revendication 1,
**caractérisée par**
l'application d'un procédé d'inversion mathématique, dans lequel les valeurs déterminées en fonction de l'angle pour les coefficients de réflexion provenant des signaux de mesure et de réflexion électromagnétiques (em) et acoustiques (ac) sont couplées en chaque point de mesure ($P_{ij}$) avec un système d'équations constitué d'équations selon Fresnel pour les signaux de mesure et de réflexion électromagnétiques (em) et d'équations selon Zoeppritz pour les signaux de mesure et de réflexion acoustiques (ac) et à partir de là la densité, la teneur en eau et la composition de la couche de neige (21) sont déterminées en fonction de l'angle en chaque point de mesure ($P_{ij}$) dans chaque limite de couche ($LB_i$) en tant que paramètres physiques importants.

6. Dispositif de mesure (20) pour l'analyse sans destruction d'une couche de neige (21) par détermination du comportement à la réflexion de signaux de mesure en des points de mesure ($P_{ij}$) dans des limites de couche ($LB_i$) dans la couche de neige (21) comprenant au moins un émetteur (25) émettant à partir d'au-dessous de la couche de neige (21) vers le haut, un récepteur (26) recevant au-dessous de la couche de neige (21) vers le bas et un dispositif d'analyse (36) pour les signaux de mesure et les signaux de réflexion, l'émetteur (25) étant conçu pour l'émission et le récepteur (26) pour la réception de signaux électromagnétiques (em), pour la mise en oeuvre du procédé de mesure selon les revendications 1 à 5,
**caractérisé par**

• au moins un autre émetteur (27) émettant à partir d'au-dessous de la couche de neige (21) vers le haut, qui est conçu pour l'émission de signaux acoustiques (ac), et au moins un autre récepteur (28) recevant au-dessous de la couche de neige (21) vers le bas, qui est conçu pour la réception de signaux acoustiques (ac),
• au moins une unité d'émission (31) avec l'émetteur (25) pour l'émission de signaux de mesure électromagnétiques (em) et l'émetteur (27) pour l'émission de signaux de mesure acoustiques (ac) ,
• au moins une unité de réception (32) avec le récepteur (26) pour la réception de signaux de réflexion électromagnétiques (em) et le récepteur (28) pour la réception de signaux de réflexion acoustiques (ac) et par
• une disposition séparée dans l'espace de l'unité de réception (31) de l'unité de réception (32) avec une distance ($X_m$) variable dans le cas d'un système monocanal (30) avec exactement une unité d'émission (31) et une unité de réception (32) ou une distance fixe ou une première distance ou une seconde distance variable ($X_m$, $Y_m$) dans le cas d'un système multicanaux (40) avec une ou plusieurs unités d'émission (31) et une ou plusieurs unités de réception (32).

7. Dispositif de mesure selon la revendication 6,
**caractérisé par**
l'utilisation d'au moins deux systèmes acoustiques à radar (23, 24) combinés comme unités d'émission et de réception (31, 32) avec une distance variable ($Y_m$) entre eux, chaque système acoustique à radar (23, 24) combiné disposant d'un émetteur (25) électromagnétique (em) et d'un récepteur (26 ; système radar) électromagnétique (em) et d'un émetteur (27) acoustique (ac) et d'un récepteur (28 ; système acoustique) acoustique (ac).

8. Dispositif de mesure selon la revendication 6 ou 7,
**caractérisé par**
un système de rails (29) pour le déplacement horizontal des unités d'émission et de réception (31, 32) de la première distance ($X_m$) variable et/ou des systèmes acoustiques à radar (23, 24) combinés de la seconde distance variable ($Y_m$) et/ou d'un déplacement ($Z_m$) pour le déplacement parallèle des unités d'émission et de réception (31, 32) ou des systèmes acoustiques à radar (23, 24) combinés pour l'établissement du profil.

9. Dispositif de mesure selon la revendication 6,
   **caractérisé par**
   un dispositif de commande (37) pour la commande télécommandée ou autonome du procédé de mesure et des unités d'émission et de réception (31, 32) dans leur position horizontale au-dessous de la couche de neige (21) .s

10. Dispositif de mesure selon la revendication 6,
    **caractérisé par**
    un dispositif de transmission (38) pour la télétransmission des signaux de mesure et de réception en un lieu (39) situé au-dessus de la couche de neige (21).

02

$P_{ij}$

$\Theta = 90°$

$\Phi = 120°$

$LB_i$

04

06

em

05

03

01

07

prior art

08

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3416246 C1
- WO 01116560 A2
- DE 19528198 A1
- DE 3002791 C2
- DE 19633813 A1

**In der Beschreibung aufgeführte Nicht-Patentliteratur**

- **VERÖFFENTLICHUNG I.** Measuring specific surface area of snow by near-infrared photography. *Matzl, Schneebeli, Journal of Glaciology,* 2006, vol. 52 (179), 558-564
- **Maysenhölder et al.** Schallabsorption von Schnee. Fraunhofer Publica IBP-Mitteilung, 2008, vol. 35
- **O. Eisen.** Inference of velocity pattern from isochronous layers in firn, using an inverse method. *Journal of Glaciology,* 2008, vol. 54 (187), 613-630
- **Heilig et al.** International Snow Science Workshop in Whistler. *ISSW 2008,* 22. September 2008, 111-117